# EUROPEAN PATENT SPECIFICATION

(11) **EP 2 327 735 B1**
(45) Date of publication and mention of the grant of the patent: **21.12.2016**
(21) Application number: 09809268.7
(22) Date of filing: 01.09.2009
(51) Int. Cl.: C08G 63/08, C08G 63/82, C08G 63/78

(54) **METHOD FOR PREPARING POLYLACTIC ACID AND PRODUCTS THEREOF USING A TWIN-SCREW EXTRUDER**
VERFAHREN ZUR HERSTELLUNG VON POLYMILCHSÄURE UND PRODUKTEN DARAUS UNTER VERWENDUNG EINES DOPPELSCHNECKENEXTRUDERS
PROCÉDÉ DE PRÉPARATION DE L'ACIDE POLYLACTIQUE ET DE SES DÉRIVÉS AU MOYEN D'UNE EXTRUDEUSE À DEUX VIS

(30) Priority: 01.09.2008 CN 200810146618
(43) Date of publication of application: 01.06.2011
(73) Proprietor: Nanjing University of Technology, Gulou Nanjing, Jiangsu 210009 (CN)
(72) Inventor: LI, Zhenjiang, Nanjing Jiangsu 210009 (CN); KAN, Suli, Nanjing Jiangsu 210009 (CN); GUO, Chang, Nanjing Jiangsu 210009 (CN); WANG, Yanqin, Nanjing Jiangsu 210009 (CN); SHENG, Shichuan, Nanjing Jiangsu 210009 (CN); SONG, Ping, Nanjing Jiangsu 210009 (CN); OUYANG, Pingkai, Nanjing Jiangsu 210009 (CN)
(74) Representative: Kramer Barske Schmidtchen Patentanwälte PartG mbB
(86) International application number: PCT/CN2009/073674
(87) International publication number: WO 2010/022683

(56) References cited:
- EP-A1- 0 372 221
- CN-A- 101 186 687
- DE-A1-102006 038 934
- US-A- 5 302 693
- US-B2- 7 053 221
- CONNOR E F ET AL: "FIRST EXAMPLE OF N-HETEROCYCLIC CARBENES AS CATALYSTS FOR LIVING POLYMERIZATION: ORGANOCATALYTIC RING-OPENING POLYMERIZATION OF CYCLIC ESTERS", JOURNAL OF THE AMERICAN CHEMICAL SOCIETY, ACS PUBLICATIONS, US, vol. 124, no. 6, 1 January 2002 (2002-01-01), page 914FF, XP009061789, ISSN: 0002-7863, DOI: 10.1021/JA0173324
- OLIVIER COULEMBIER ET AL: "Alcohol Adducts of N -Heterocyclic Carbenes: Latent Catalysts for the Thermally-Controlled Living Polymerization of Cyclic Esters", MACROMOLECULES, vol. 39, no. 17, 1 August 2006 (2006-08-01), pages 5617-5628, XP55065316, ISSN: 0024-9297, DOI: 10.1021/ma0611366
- DUONG H A ET AL: "Reversible carboxylation of N-heterocyclic carbenes", CHEMICAL COMMUNICATIONS; [6015D], ROYAL SOCIETY OF CHEMISTRY, 1 January 2004 (2004-01-01), pages 112-113, XP002457186, ISSN: 1359-7345
- JACOBSEN S ET AL: "Single-step reactive extrusion of PLLA in a corotating twin-screw extruder promoted by 2-ethylhexanoic acid tin(II) salt and triphenylphosphine", POLYMER, ELSEVIER SCIENCE PUBLISHERS B.V, GB, vol. 41, no. 9, 1 April 2000 (2000-04-01), pages 3395-3403, XP004184988, ISSN: 0032-3861, DOI: 10.1016/S0032-3861(99)00507-8

## Description

### Technology Field

This invention is in the field of polymeric material, specifically involving the use of twin-screw extruders in preparation of polylactic acid in a controlled manner.

### Background

Polylactic acid is a polymeric material that has good biocompatibility and degradability, causing little pollution to the environment. It has great prospects for application in the fields of pharmaceuticals, textile, and packaging.

Currently, there are two main types of synthesis methods in making polylactic acid, namely, the direct polycondensation and ring-opening polymerization. Between these two methods, the direct polycondensation requires more exact reaction conditions. The polymer synthesized using this method has a low molecular weight and poor quality. Therefore, it is more common to use ring-opening polymerization to make polylactic acid, that is, through lactide ring-opening reaction. This method has been used in the industrial scale production, such as disclosed in DE10020898. In addition, in order to shorten the reaction time, CN1325913 disclosed a method that uses microwave in synthesizing polylactic acid. However, due to the limitation of the equipment, this method cannot achieve large scale production.

Catalysts for ring-opening polymerization in general include organo-tin salt, organo-zinc salt, and organo-aluminum salt, such as in JP0124651, CN1544504, and CN1814644. Due to the presence of residual organo-metal catalysts in the product polylactic acid, the polylactic acid cannot be used in some fields, for example, bio-medical and microelectronics. Subsequently, in 2001, Eric Conner and others (Eric F. Conner et al., Journal of the American Chemical Society, 2002, 124, 914), first used a highly effective organocatalyst - *N*-heterocyclic carbenes - in lactide ring-opening polymerization. However, *N*-heterocyclic carbenes are sensitive to air and water, which greatly impeded their preparation and utilization. As a result, lactide ring-opening polymerization catalyzed by *N*-heterocyclic carbenes is limited to laboratory scale synthesis and very difficult to scale up.

*N*-heterocyclic carbenes. Hung A. Duong and others (Hung A. Duong, et al., Chemical Communications, 2004, 112) discovered that *N*-heterocyclic carbenes and CO₂ react to form adducts. At a certain temperature, the CO₂ adducts of carbenes may release CO₂ to form carbene. Adriana T. and others (Adriana T. et al., Journal of Organometallic Chemistry, 2006, 691, 5356) proposed that the CO₂ adducts of carbenes can be stored in the form of *N*-heterocyclic carbenes. However, there are no existing technologies that use CO₂ adducts of carbenes as a catalyst for ring-opening polymerization.

Currently, the production methods for lactide ring-opening polymerization are also very limited. Traditionally, this reaction is commonly carried out in batch reactors. As a new technology, reactive extrusion enjoys the followings advantages over the batch process: (1) raw material measurement, transportation, mixing, reaction, and processing of the melt are integrated, resulting in a simple, highly automated process, which is suitable for large scale production; (2) the reaction mixture is subject to strong shearing and kneading by the screw, which results in a good dispersion. Unreacted raw material or reaction byproducts can be easily removed in a timely manner; (3) screws are self-cleaning. The material retention time is short. Products can be directly molded. Therefore, the production cost is low and products are of good quality; (4) the chemical structure of the products as well as the morphology of the materials can all be controlled. The product is of high technical content and high profitability; (5) temperatures in different sections can be individually controlled, providing a better control of the reaction while reducing energy consumption. However, due to its own characteristics, the reactive extrusion technology is also subject to certain restrictions. E.g., the reaction needs to be completed in one step and cannot have intermediate steps; the reaction needs to be completed within the time limit of the reactive extrusion technology, usually 5 to 30 minutes; and the reaction needs to be carried out at a high temperature molten state.

The polylactic acid reactive extrusion technology is mainly used as a means to modify the characteristics of polylactic acid. Due to the polymerization time constraints, reactive extrusion polymerization of polylactic acid mainly involves first obtaining a prepolymer of lactic acid, lactide, or their derivatives, and then mixing the prepolymer with one or more monomers in the twin-screw extruder to accomplish addition polymerization or condensation polymerization, e.g., JP940215520, JP940096021. This method requires two reaction steps, the first step of prepolymer preparation in particular is a complex operation, which does not fully utilize the advantages of the reactive extrusion technology. Jacobsen S. (Jacobsen, S. et al., Polymer, 2000, 41 (9), 3395) used a mixture of equivalent amount of Sn with triphenyl phosphine as the catalyst, polymerized lactide by twin-screw reactive extrusion to obtain polylactic acid of the molecular weight in the range of 70,000 ∼ 100,000, accomplishing one step reactive extrusion of lactide to produce lactic acid. However, polylactic acid obtained using this method contains metal residue; the structure of end of polylactic acid chains is not clear; and this method cannot control the molecular weight of polylactic acid to a target value, all of which limit the field of applications of polylactic acid.

EP 0 372 221 A1 relates to a method for manufacturing absorbable polyesters, which is characterized in that the polymerization method is carried out in a continuous manner in a temperature-controlled extruder.

O. Coulembier et al., Macromolecules 2006, 39, 5617-5628, disclose a study on alcohol adducts of N-heterocyclic carbenes as latent catalysts for the thermally controlled living polymerization of cyclic esters.

DE 10 2006 038 934 A1 relates to a method for manufacturing α-hydroxy ketones by a carbene-catalyzed "Umpolung".

### Summary

The technical problems to be addressed by the invention disclosed herein are to provide a method of preparing polylactic acid and its products using a twin-screw extruder. The polylactic acid obtained using this method does not contain metal residue, its molecular weight and terminal structure are controllable, and its molecular weight distribution is narrow.

Since *N*-heterocyclic carbenes are very sensitive to water and oxygen, the preparation, transfer, and catalytic reaction needs to be carried out in a water-free, anaerobic environment. Such a requirement makes the *N*-heterocyclic carbene transfer, i.e., adding *N*-heterocyclic carbenes into reactive extrusion system, infeasible. To this end, the present invention uses adducts of carbenes, which are stable in the presence of water and oxygen, but can release CO₂ to form *N*-heterocyclic carbenes at a certain temperature (the decarboxylation temperature). The decarboxylation temperature of carbon dioxide from the CO₂ adducts of carbenes is determined by substituents on the ring. The present invention involves finding the CO₂ adducts of carbenes that have a suitable decarboxylation temperature by adjusting substituents on the carbene ring. The CO₂ adducts of carbenes are used in lactide ring-opening polymerization by reactive extrusion. That is, the selected CO₂ adducts of carbenes should have a decarboxylation temperature that is suitable both for the ring-opening polymerization of lactide and for the reactive extrusion process. The invention uses CO₂ adducts of carbenes as a catalyst precursor of small organic molecules, which has high catalytic activity in lactide ring-opening polymerization, and at the same time solves problems of metal residue in the polylactic acid.

In order to effectively apply the reactive extrusion technology in this reaction, the present invention also takes into consideration the requirement for the reaction time imposed by the reactive extrusion technology. Through screening of various substituents of *N*-heterocyclic carbenes, the present invention discovered a category of CO₂ adducts of carbenes as the catalyst precursor, which accelerates the reaction rate. In addition, the reactive extrusion process can further select the appropriate temperature, aspect ratio of the screw, and screw rotation speed in order to obtain a better dispersion in the reaction system, which in turn speeds up the reaction and thus shortens the reaction time.

Regarding the controllability of the terminal structure and molecular weight of polylactic acid, e.g., narrowing molecular weight distribution, which may be solved by providing active hydrogen containing compounds (ROH) as the initiator into the ring-opening polymerization reaction, which results in polylactic acid with terminal structure of RO- and -OH, while the ratio of the lactide monomer and initiator determines the target molecular weight of polylactic acid obtained. In the presence of the initiator, *N*-heterocyclic carbene catalyzed ring-opening polymerization of lactide is living polymerization, while reactive extrusion system also has a good dispersion. The polylactic acid so obtained may have a relatively narrow molecular weight distribution.

Therefore, using the CO₂ adducts of carbenes of the present invention as the catalyst precursor to be mixed with lactide, using the reactive extraction technology, which releases the *N*-heterocyclic carbenes during the reactive extrusion process, this catalytic ring-opening polymerization of lactide can further synthesize polylactic acid and its products having controllable molecular weight and terminal structures, without metal residues, and having a narrow molecular weight distribution.

The technical solution in this invention is as follows:
A method of making polylactic acid and its products using a twin-screw extruder, which comprises mixing the CO₂ adducts of carbenes of formula (I) with the lactide, extrude the mixture using reactive extrusion in a twin-screw extruder to obtain polylactic acid and its products, 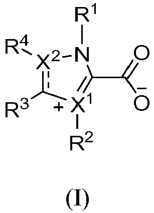 wherein the dotted line indicates an optional double bond;
   X¹ is chosen from S and N; X² is chosen from C and N; R¹ and R² can be the same or different and are chosen from hydrogen,
   alkyl groups having 1 to 10 carbon atoms,
   alkyl groups having 1 to 10 carbon atoms and also having one or more substituents chosen from a halogen atom, a hydroxyl group, a phenyl group, and a cyano group,
   cycloalkyl groups having 3 to 6 carbon atoms,
   a halogen atom,
   an adamantyl group,
   a phenyl group, and
   a phenyl group having one or more substituents chosen from a halogen atom, a hydroxyl group, an alkyl group, and a cyano group;
   R³ and R⁴ can be the same or different and are chosen from
   hydrogen,
   a halogen atom,
   a cyano group,
   a hydroxyl group,
   alkyl groups having 1 to 4 carbon atoms,
   alkyl groups having 1 to 4 carbon atoms and also having one or more substituents chosen from a halogen atom, a hydroxyl group, a phenyl group, and a cyano group,
   a phenyl group, and
   a phenyl group having one or more substituents chosen from a halogen atom, a hydroxyl group, an alkyl group, and a cyano group.

Alternatively, R³ and R⁴ are connected to form cycloalkyl or cycloalkenyl groups having 3 to 8 carbon atoms; or R³ and R⁴ are connected to form a benzene ring; or R² and R³ are connected to form 5- or 6-*N*-heterocyclic compounds that do not have any substituent.

One specific structure of the above-described CO₂ adducts of carbenes can be represented as in formula (II): 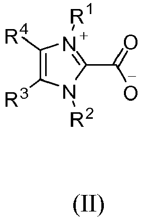 R¹ and R²³ can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group.

Alternatively, R³ and R⁴ are connected to form cycloalkenyl groups having 3 to 8 carbon atoms; or R³ and R⁴ are connected to form a benzene ring.

One specific structure of the above-described CO₂ adducts of carbenes can be presented as in formula (III): 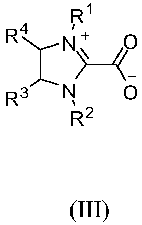 R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group.

Alternatively, R³ and R⁴ are connected to form cycloalkyl groups having 3 to 8 carbon atoms.

One specific structure of the above-described CO₂ adducts of carbenes can be represented as in formula (IV): 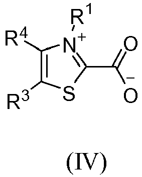 R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group
0

Alternatively, R³ and R⁴ are connected to form cycloalkenyl groups having 3 to 8 carbon atoms; or R³ and R⁴ are connected to form a benzene ring.

One specific structure of the above-described CO₂ adducts of carbenes can be presented as in formula (V): 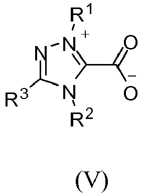 R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group.

Alternatively, R² and R³ are connected to form 5- or 6-*N*-heterocyclics that do not have any substituent.

In the above-described method, the CO₂ adducts of carbenes and lactide can be of a molar ratio ranging from 1:5 to 2000, preferably 1:100 to 1000. The lactide can be L-lactide, D-lactide, meso-lactide, racemic lactide, or a mixture of L-lactide, D-lactide, and meso-lactide at any proportion.

The above-described method can use compounds having hydroxyl groups as the initiator, preferably alcohols, for example, benzyl alcohol or phenylethyl alcohol. The molar ratio of the initiator and lactide can range from 1/10000 to 1/2, preferably 1/1000 to 1/100.

A specific twin-screw extruder in the above-described method is an intermeshing co-rotating twin-screw extruder. The barrel of the extruder comprises multiple sections heated separately. The temperatures of individual sections are independently controllable using circulating cooling water. Each heating section can be at the same or different temperatures ranging from 50 °C to 300 °C, preferably from 100 °C to 200 °C. The gas pressure inside the barrel can range from 0.5 kPa to 1 kPa. The ratio of length and diameter of the screw (the aspect ratio) can range from 30 to 70. The rotation speed of the screw can range from 5 rpm to 200 rpm; the material feed rate can range from 0.5kg/hour to 5kg/hour. The head of the twin-screw extruder can be connected with a molding equipment so that the extruded polylactic acid and its products can be directly molded.

As in the method of controlled preparation of polylactic acid using twin-screw extruder, in the process of reactive extrusion, the CO₂ adducts of carbenes release CO₂ and form *N*-heterocyclic carbenes, which catalyze lactide ring-opening polymerization. The CO₂ released is vented. The residual catalyst is a biodegradable organic material and is in a small amount, which will not affect the property of the polylactic acid. In addition, the entire polymerization process is a living polymerization, which affords the control of the molecular weight of the polylactic acid, a narrow molecular weight distribution, and the precise control of the terminal group on the polylactic acid. The method of this invention provides a single step reaction process, which is quick, simple, cost-effective, and can be used for large-scale production.

### Description of the Drawings

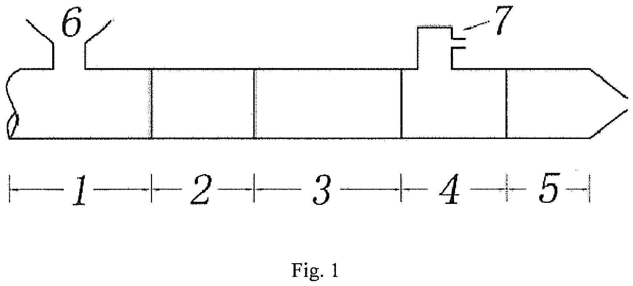

Examples of this invention are described in detail with reference to the drawings in the following. Figure 1 is a schematics of sections of the barrel of a twin-screw extruder barrel. Among them, 1 is the section where raw material is fed; 2 is Section I; 3 is Section II, 4 is Section III; 5 is Section IV; 6 is the hopper for the raw material; 7 is a vacuum valve.

### Examples

The following examples are used to further illustrate the present invention. These examples are for the purpose of illustration and in no way limit the invention. One of ordinary skill in the art would appreciate that these examples do not limit the present invention in any aspects, and that appropriate modification and adjustment of the parameters can be made without violating the essence of this invention and deviation from the scope of the present invention.

In all of the following examples, the twin-screw extruder is first purged with argon gas, then lactide, the initiator (optional), the CO₂ adducts of carbenes are uniformly mixed, and fed into the extruder at a constant rate. The structure and number of the CO₂ adducts of carbenes in the following examples are listed in Table 1.

**Table 1: CO₂ adducts of carbenes used in the examples**

| No. | Structure | No. | Structure | No. | Structure |
|---|---|---|---|---|---|
| a | 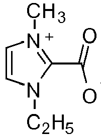 | b | 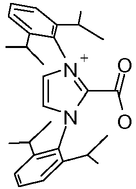 | c | 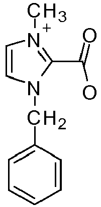 |
| d | 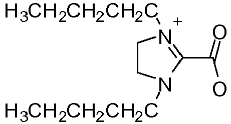 | e | 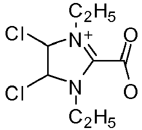 | f | 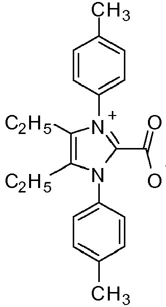 |
| g | 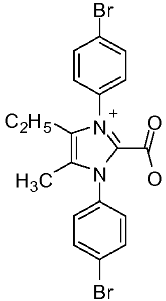 | h | 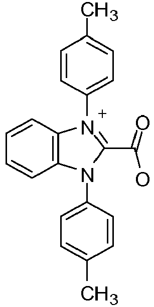 | i | 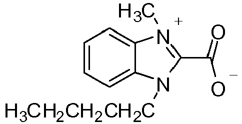 |
| j | 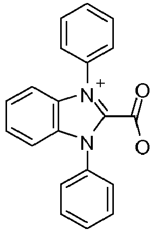 | k | 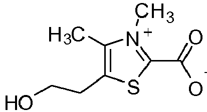 | l | 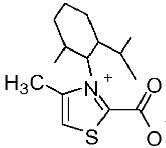 |
| m | 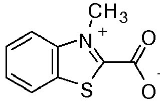 | n | 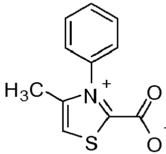 | o | 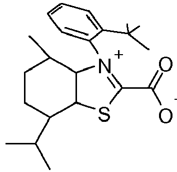 |
| p | 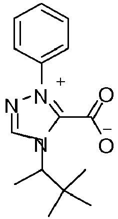 | q | 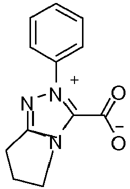 | r | 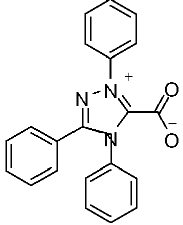 |
| s | 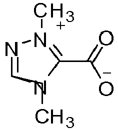 | | | | |

Figure 1 is a schematic of the sections in the barrel of the twin-screw extruder. The twin-screw extruder in all of the following examples has a barrel with four sections, wherein each individual section has independent temperature control using circulating cooling water. The method of operating the twin-screw extruder is known in the field. One of ordinary skill in the art may complete the operation in accordance with the following operating parameters.

The molecular weight and molecular weight distribution of the polylactic acid are obtained by gel permeation chromatography (chloroform as the mobile phase, 35 °C, polystyrene standard as the reference).

### Example 1:

The parameters of the twin-screw extruder were set as follows:
Screw speed: 80 rpm, vacuum: 0.5 kPa, aspect ratio: 48, feed rate: 1.75 kg/h.

The temperatures of various barrel sections were set as follows:
Section I: 140 °C, Section II: 185 °C, Section III: 200 °C, Section IV: 185 °C.

L-lactide (672 g, 4.67 mol) and the CO₂ adduct of carbene a (0.36 g, 0.002 mol) were evenly mixed and fed into the twin-screw extruder at a constant rate. Six hundred twenty eight grams (628 g) of polylactic acid were extruded using the above described operating parameters and cooled by air cooling. The polylactic acid thus obtained has a molecular weight of 25,000 and a molecular weight distribution of 2.1.

### Example 2:

The parameters of the twin-screw extruder were set as follows:
Screw speed: 50 rpm, vacuum: 0.5 kPa, aspect ratio: 48, material feed rate: 0.5 kg/h.

The temperatures of various barrel sections were set as follows:
Section I: 120 °C , Section II: 175 °C, Section III : 180 °C, Section IV: 175 °C.

D-lactide (2016 g, 14 mol) and the CO₂ adduct of carbene b (1210.38 g, 2.8 mol) were evenly mixed and fed into the twin-screw extruder at a constant rate. One thousand eight hundred and eighty two grams (1882 g) of polylactic acid were extruded using the above described operating parameters and cooled by air cooling. The polylactic acid thus obtained has a molecular weight of 6,000 and a molecular weight distribution of 2.2.

### Example 3:

The parameters of the twin-screw extruder were set as follows:
Screw speed: 80 rpm, vacuum: 0.5 kPa, aspect ratio: 48, material feed rate: 1.25 kg/h.

The temperatures of various barrel sections were set as follows:
Section I: 120 °C, Section II: 175 °C, Section III: 180 °C, Section IV: 175 °C.

Meso-lactide (2016 g, 14 mol), the CO₂ adduct of carbene c (18.15 g, 0.084 mol), and benzyl alcohol (3.03 g, 0.028 mol) were evenly mixed and fed into the twin-screw extruder at a constant rate. One thousand nine hundred and forty two grams (1942 g) of polylactic acid were extruded using the above described operating parameters and cooled by air cooling. The polylactic acid thus obtained has a molecular weight of 68,000 and a molecular weight distribution of 1.4.

### Example 4:

The parameters of the twin-screw extruder were set as follows:
Screw speed: 50 rpm, vacuum: 0.8 kPa, aspect ratio: 40, material feed rate: 1.75 kg/h.

The temperatures of various barrel sections were set as follows:
Section I: 120 °C, Section II: 175 °C, Section III: 180 °C, Section IV: 175 °C.

Racemic lactide (2016 g, 14 mol), the CO₂ adduct of carbene d (15.83 g, 0.07 mol), and benzyl alcohol (2.49 g, 0.023 mol) were evenly mixed and fed into the twin-screw extruder. One thousand nine hundred and sixty four grams (1964 g) of polylactic acid were extruded using the above described operating parameters and cooled by air cooling. The polylactic acid thus obtained has a molecular weight of 84,000 and a molecular weight distribution of 1.7.

### Example 5:

The parameters of the twin-screw extruder were set as follows:
Screw speed: 80 rpm, vacuum: 0.5 kPa, aspect ratio: 40, material feed rate: 4.5 kg/h.

The temperatures of various barrel sections were set as follows:
Section I: 145 °C, Section II: 185 °C, Section III: 200 °C, Section IV: 185 °C.

Racemic lactide (2016 g, 14 mol), the CO₂ adduct of carbene e (6.66 g, 0.028 mol), and methanol (0.90 g, 0.028 mol) were evenly mixed and fed into the twin-screw extruder at a constant rate. One thousand nine hundred and seventy five grams (1975 g) of polylactic acid were extruded using the above described operating parameters and cooled by air cooling. The polylactic acid thus obtained has a molecular weight of 59,000 and a molecular weight distribution of 1.5.

### Example 6:

The parameters of the twin-screw extruder were set as follows:
Screw speed: 5 rpm, vacuum: 1 kPa, aspect ratio: 70, material feed rate: 4.5 kg/h.

The temperatures of various barrel sections were set as follows:
Section I: 50 °C, Section II: 145 °C, Section III: 200 °C, Section IV: 185 °C.

Meso-lactide (2016 g, 14 mol), the CO₂ adduct of carbene f (4.87 g, 0.014 mol), and phenylethyl alcohol (1.71 g, 0.014 mol) were evenly mixed and fed into the twin-screw extruder at a constant rate. One thousand nine hundred and sixty six grams (1966 g) of polylactic acid were extruded using the above described operating parameters and cooled by air cooling. The polylactic acid thus obtained has a molecular weight of 104,000 and a molecular weight distribution of 1.6.

### Example 7:

The parameters of the twin-screw extruder were set as follows:
Screw speed: 150 rpm, vacuum: 0.5 kPa, aspect ratio: 30, material feed rate: 4.5 kg/h.

The temperatures of various barrel sections were set as follows:
Section I: 145 °C, Section II: 150 °C, Section III: 170 °C, Section IV: 135 °C.

L-lactide (2016 g, 14 mol), the CO₂ adduct of carbene g (1293.49 g, 2.8 mol), and methanol (224.21 g, 7 mol) were evenly mixed and fed into the twin-screw extruder at a constant rate. One thousand nine hundred and five grams (1905 g) of polylactic acid were extruded using the above described operating parameters and cooled by air cooling. The polylactic acid thus obtained has a molecular weight of 288 and a molecular weight distribution of 1.5.

### Example 8:

The parameters of the twin-screw extruder were set as follows:
Screw speed: 200 rpm, vacuum: 0.5 kPa, aspect ratio: 48, material feed rate: 4.5 kg/h.

The temperatures of various barrel sections were set as follows:
Section I: 170 °C, Section II: 185 °C, Section III: 200 °C, Section IV: 140 °C.

D-lactide (2016 g, 14 mol), the CO₂ adduct of carbene h (119.75 g, 0.35 mol), and methanol (5.61 g, 0.175 mol) were evenly mixed and fed into the twin-screw extruder at a constant rate. One thousand nine hundred and twenty four grams (1924 g) of polylactic acid were extruded using the above described operating parameters and cooled by air cooling. The polylactic acid thus obtained has a molecular weight of 11,000 and a molecular weight distribution of 1.7.

### Example 9:

The parameters of the twin-screw extruder were set as follows:
Screw speed: 80 rpm, vacuum: 1 kPa, aspect ratio: 48, material feed rate: 4.5 kg/h.

The temperatures of various barrel sections were set as follows:
Section I: 90 °C, Section II: 120 °C, Section III: 150 °C, Section IV: 140 °C.

D-lactide (2016 g, 14 mol), the CO₂ adduct of carbene i (1.62 g, 0.007 mol), and phenethyl alcohol (0.17 g, 0.0014 mol) were evenly mixed and fed into the twin-screw extruder at a constant rate, while the head of extruder is connected to a molding equipment. The lactic acid was extruded and molded into a film using the above described operating parameters and cooled by air cooling.

### Example 10:

The parameters of the twin-screw extruder were set as follows:
Screw speed: 5 rpm, vacuum: 1 kPa, aspect ratio: 40, material feed rate: 4.5 kg/h.

The temperatures of various barrel sections were set as follows:
Section I: 145 °C, Section II: 185 °C, Section III: 300 °C, Section IV: 185 °C.

L-lactide (2016 g, 14 mol), the CO₂ adduct of carbene j (7.22 g, 0.023 mol), and methanol (0.05 g, 0.0014 mol) were evenly mixed and fed into the twin-screw extruder at a constant rate. One thousand nine hundred and fifty three grams (1953 g) of polylactic acid were extruded using the above described operating parameters and cooled by air cooling. The polylactic acid thus obtained has a molecular weight of 85,000 and a molecular weight distribution of 2.2.

### Example 11:

The parameters of the twin-screw extruder were set as follows:
Screw speed: 100 rpm, vacuum: 0.5 kPa, aspect ratio: 48, material feed rate: 5 kg/h.

The temperatures of various barrel sections were set as follows:
Section I: 165 °C, Section II: 200 °C, Section III: 300 °C, Section IV: 185 °C.

L-lactide (2016 g, 14 mol), the CO₂ adduct of carbene k (5.63 g, 0.028 mol), and benzyl alcohol (3.03 g, 0.028 mol) were evenly mixed and fed into the twin-screw extruder at a constant rate. One thousand nine hundred and six grams (1906 g) of polylactic acid were extruded using the above described operating parameters and cooled by air cooling. The polylactic acid thus obtained has a molecular weight of 78,000 and a molecular weight distribution of 1.7.

### Example 12:

The parameters of the twin-screw extruder were set as follows:
Screw speed: 150 rpm, vacuum: 1 kPa, aspect ratio: 48, material feed rate: 1.0 kg/h.

The temperatures of various barrel sections were set as follows:
Section I: 145 °C, Section II: 185 °C, Section III: 200 °C, Section IV: 165 °C.

L-lactide (2016 g, 14 mol), the CO₂ adduct of carbene 1 (7.87 g, 0.028 mol) and benzyl alcohol (6.05 g, 0.056 mol) were evenly mixed and fed into the twin-screw extruder at a constant rate. One thousand nine hundred and eighty three grams (1983 g) of polylactic acid were extruded using the above described operating parameters and cooled by air cooling. The polylactic acid thus obtained has a molecular weight of 31,000 and a molecular weight distribution of 1.4.

### Example 13:

The parameters of the twin-screw extruder were set as follows:
Screw speed: 125 rpm, vacuum: 0.8 kPa, aspect ratio: 48, material feed rate: 1.5 kg/h.

The temperatures of various barrel sections were set as follows:
Section I: 165 °C, Section II: 200 °C, Section III: 250 °C, Section IV: 185 °C.

L-lactide (2016 g, 14 mol), the CO₂ adduct of carbene m (4.44 g, 0.023 mol) and benzyl alcohol (3.78 g, 0.035 mol) were evenly mixed and fed into the twin-screw extruder at a constant rate. One thousand nine hundred and forty three grams (1943 g) of polylactic acid were extruded using the above described operating parameters and cooled by air cooling. The polylactic acid thus obtained has a molecular weight of 53,000 and a molecular weight distribution of 1.7.

### Example 14:

The parameters of the twin-screw extruder were set as follows:
Screw speed: 150 rpm, vacuum: 1 kPa, aspect ratio: 40, material feed rate: 1.5 kg/h.

The temperatures of various barrel sections were set as follows:
Section I: 180 °C, Section II: 225 °C, Section III : 300 °C, Section IV: 185 °C.

L-lactide (2016 g, 14 mol), the CO₂ adduct of carbene n (5.04 g, 0.023 mol), and methanol (0.74 g, 0.023 mol) were evenly mixed and fed into the twin-screw extruder at a constant rate. One thousand nine hundred and twenty one grams (1921 g) of polylactic acid were extruded using the above described operating parameters and cooled by air cooling. The polylactic acid thus obtained has a molecular weight of 92,000 and a molecular weight distribution of 1.8.

### Example 15:

The parameters of the twin-screw extruder were set as follows:
Screw speed: 150 rpm, vacuum: 0.7 kPa, aspect ratio: 48, material feed rate: 2.5 kg/h.

The temperatures of various barrel sections were set as follows:
Section I: 200 °C, Section II: 250 °C, Section III: 300 °C, Section IV: 165 °C.

L-lactide (2016 g, 14 mol), the CO₂ adduct of carbene o (26.18 g, 0.07 mol), and benzyl alcohol (7.56 g, 0.07 mol) were evenly mixed and fed into the twin-screw extruder at a constant rate. One thousand nine hundred and forty five grams (1945 g) of polylactic acid were extruded using the above described operating parameters and cooled by air cooling. The polylactic acid thus obtained has a molecular weight of 24,000 and a molecular weight distribution of 1.4.

### Example 16:

The parameters of the twin-screw extruder were set as follows:
Screw speed: 150 rpm, vacuum: 1 kPa, aspect ratio: 48, material feed rate: 1.5 kg/h.

The temperatures of various barrel sections were set as follows:
Section I: 165 °C, Section II: 185 °C, Section III: 250 °C, Section IV: 185 °C.

L-lactide (2016 g, 14 mol), the CO₂ adduct of carbene p (6.56 g, 0.023 mol), and benzyl alcohol (3.78 g, 0.035 mol) were evenly mixed and fed into the twin-screw extruder at a constant rate. One thousand nine hundred and ninety four grams (1994 g) of polylactic acid were extruded using the above described operating parameters and cooled by air cooling. The polylactic acid thus obtained has a molecular weight of 58,000 and a molecular weight distribution of 1.5.

### Example 17:

The parameters of the twin-screw extruder were set as follows:
Screw speed: 125 rpm, vacuum: 1 kPa, aspect ratio: 40, material feed rate: 1.5 kg/h.

The temperatures of various barrel sections were set as follows:
Section I: 185 °C, Section II: 225 °C, Section III: 300 °C, Section IV: 165 °C.

L-lactide (2016 g, 14 mol), the CO₂ adduct of carbene q (4.37 g, 0.018 mol), and phenylethyl alcohol (2.20 g, 0.018 mol) were evenly mixed and fed into the twin-screw extruder at a constant rate. One thousand nine hundred and three grams (1903 g) of polylactic acid were extruded using the above described operating parameters and cooled by air cooling. The polylactic acid thus obtained has a molecular weight of 109,000 and a molecular weight distribution of 2.0.

### Example 18:

The parameters of the twin-screw extruder were set as follows:
Screw speed: 150 rpm, vacuum: 0.8 kPa, aspect ratio: 48, material feed ratio: 1.0 kg/h.

The temperatures of various barrel sections were set as follows:
Section I: 200 °C, Section II: 225 °C, Section III: 280 °C, Section IV: 165 °C.

L-lactide (2016 g, 14 mol), the CO₂ adduct of carbene r (8.14 g, 0.023 mol), and benzyl alcohol (3.78 g, 0.035 mol) were evenly mixed and fed into the twin-screw extruder at a constant rate. One thousand nine hundred and sixty three grams (1963 g) of polylactic acid were extruded using the above described operating parameters and cooled by air cooling. The polylactic acid thus obtained has a molecular weight of 56,000 and a molecular weight distribution of 1.8.

### Example 19:

The parameters of the twin-screw extruder were set as follows:
Screw speed: 125 rpm, vacuum: 0.5 kPa, aspect ratio: 48, material feed rate: 1.5 kg/h.

The temperatures of various barrel sections were set as follows:
Section I: 145 °C, Section II: 165 °C, Section III: 250 °C, Section IV: 185 °C.

L-lactide (2016 g, 14 mol), the CO₂ adduct of carbene s (5.36 g, 0.035 mol), and benzyl alcohol (7.56 g, 0.07 mol) were evenly mixed and fed into the twin-screw extruder at a constant rate. One thousand nine hundred and thirty five grams (1935 g) of polylactic acid were extruded using the above described operating parameters and cooled by air cooling. The polylactic acid thus obtained has a molecular weight of 35,000 and a molecular weight distribution of 1.4.

## Claims

1. A method for preparing polylactic acid, comprising:
providing a mixture comprising a carbon dioxide adduct of carbene of formula (I) and a lactide, and
obtaining polylactic acid through reactive extrusion of the mixture using a twin-screw extruder, 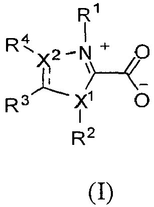 wherein the dotted line together with the solid line parallel to the dotted line represents a single bond or a double bond;
X¹ is chosen from S and N;
X² is chosen from C and N; and
R¹, R², R³ and R⁴ satisfy at least one of the following conditions:
(I) R¹ and R² are independently chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
(II) R³ and R⁴ are independently chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group;
(III) R³ and R⁴ are connected to form cycloalkyl or cycloalkenyl groups having 3 to 8 carbon atoms fused to the 5-membered ring that contains X¹, X², and the nitrogen atom (in which case X² and the carbon atom in the 5-membered ring next to X² are also part of said cycloalkyl or cycloalkenyl rings);
(IV) R³ and R⁴ are connected to form a benzene ring fused to the 5-membered ring that contains X¹, X², and the nitrogen atom (in which case X² and the carbon atom in the 5-membered ring next to X² are also part of said benzene ring); and
(V) R² and R³ are connected to form 5-membered or 6-membered *N*-heterocyclic rings having no substituent, which are fused to the 5-membered ring that contains X¹, X², and the nitrogen atom (in which case X¹ and the carbon atom in the 5-membered ring connected to R³ are also part of said 5-membered or 6-membered N-heterocyclic rings).

2. The method of claim 1, wherein the structure of the carbon dioxide adduct of carbene is represented as in formula (II): 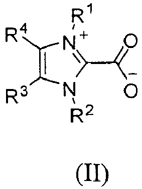 wherein R¹, R², R³ and R⁴ satisfy at least one of the following conditions:
(I) R¹ and R² are independently chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
(II) R³ and R⁴ are independently chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group;
(III) R³ and R⁴ are connected to form cycloalkyl or cycloalkenyl rings having 3 to 8 carbon atoms fused to the 5-membered ring that contains X¹, X², and the nitrogen atom (in which case X² and the carbon atom in the 5-membered ring next to X² are also part of said cycloalkyl or cycloalkenyl rings); and
(IV) R³ and R⁴ are connected to form a benzene ring fused to the 5-membered ring that contains X¹, X², and the nitrogen atom (in which case X² and the carbon atom in the 5-membered ring next to X² are also part of said benzene ring).

3. The method of claim 1, wherein the structure of the carbon dioxide adduct of carbene is represented as in formula (III): 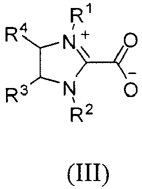 wherein R¹ and R² are independently chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
wherein R³ and R⁴ satisfy at least one of the following conditions:
(I) R³ and R⁴ are independently chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group; and
(II) R³ and R⁴ are connected to form cycloalkyl or cycloalkenyl rings having 3 to 8 carbon atoms fused to the 5-membered ring that contains X¹, X², and the nitrogen atom (in which case X² and the carbon atom in the 5-membered ring next to X² are also part of said cycloalkyl or cycloalkenyl rings).

4. The method of claim 1, wherein the structure of the carbon dioxide adduct of carbene is represented as in formula (IV): 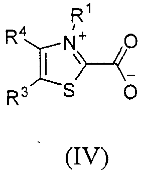 R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
wherein R³ and R⁴ satisfy at least one of the following conditions:
(I) R³ and R⁴ are independently chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group;
(II) R³ and R⁴ are connected to form cycloalkyl or cycloalkenyl rings having 3 to 8 carbon atoms fused to the 5-membered ring that contains X¹, X², and the nitrogen atom (in which case X² and the carbon atom in the 5-membered ring next to X² are also part of said cycloalkyl or cycloalkenyl rings); and
(III) R³ and R⁴ are connected to form a benzene ring fused to the 5-membered ring that contains X¹, X², and the nitrogen atom (in which case X² and the carbon atom in the 5-membered ring next to X² are also part of said benzene ring).

5. The method of claim 1, wherein the structure of the carbon dioxide adduct of carbene is represented as in formula (V): 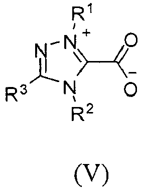 wherein R¹, R² and R³ satisfy at least one of the following conditions:
(I) R¹ and R² are independently chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
(II) R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a phenyl group having one or more substituents chosen from a halogen atom, a hydroxyl group, an alkyl group, and a cyano group; and
(III) R² and R³ are connected to form 5-membered or 6-membered *N*-heterocyclic rings having no substituent, which are fused to the 5-membered ring that contains X¹, X², and the nitrogen atom (in which case X¹ and the carbon atom in the 5-membered ring connected to R³ are also part of said 5-membered or 6-membered *N-*heterocyclic rings).

6. The method of any one of claims 1 to 5, wherein the carbon dioxide adduct of carbene and the lactide are mixed at a molar ratio of 1:5 to 2000.

7. The method of claims any one of 1 to 5, wherein the lactide is chosen from L-lactide, D-lactide, meso-lactide, racemic lactide, and mixtures thereof.

8. The method of any one of claims 1 to 5, wherein the mixture further comprises an initiator and the initiator comprises a compound having a hydroxyl group.

9. The method of claim 8, wherein the compound having a hydroxyl group is benzyl alcohol or phenethyl alcohol.

10. The method of claim 8 or 9, wherein a molar ratio of the initiator and the lactide ranges from 1/10000 to 1/2.

11. The method of any one of claims 1 to 5, wherein the twin-screw extruder is an intermeshing co-rotating twin-screw extruder and a barrel of the extruder comprises multiple sections separately heated and temperature of each section of the barrel is independently controllable using circulating cooling water.

12. The method of claim 11, wherein in the process of reactive extrusion, the temperatures of multiple heated sections of the twin-screw extruder are the same or different, ranging from 50 °C to 300 °C.

13. The method of claim 11 or 12, wherein a screw of the twin-screw extruder has an aspect ratio ranging from 30 to 70.

14. The method of any one of claims 1 to 5, wherein a head of the twin-screw extruder is connected to a molding equipment, in which the polylactic acid and its products are directly molded into a desired shape.

## Patentansprüche

1. Verfahren zur Herstellung von Polymilchsäure, umfassend:
Bereitstellen eines Gemischs, das ein Kohlendioxidaddukt eines Carbens der Formel (I) und ein Lactid umfasst, und
Erhalten von Polymilchsäure durch eine reaktive Extrusion des Gemischs unter Verwendung eines Doppelschneckenextruders, 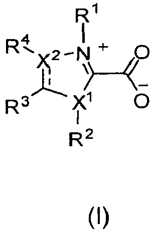 wobei die gestrichelte Linie zusammen mit der durchgezogenen Linie parallel zur gestrichelten Linie eine Einfachbindung oder eine Doppelbindung darstellt,
X¹ aus S und N ausgewählt ist,
X² aus C und N ausgewählt ist und
R¹, R², R³ und R⁴ mindestens eine der folgenden Bedingungen erfüllen:
(I) R¹ und R² sind unabhängig ausgewählt aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(II) R³ und R⁴ sind unabhängig ausgewählt aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(III) R³ und R⁴ sind zur Bildung von Cycloalkyl- oder Cycloalkenylgruppen mit 3 bis 8 Kohlenstoffatomen verbunden, die an den 5-gliedrigen Ring anelliert sind, der X¹, X² und das Stickstoffatom enthält (wobei in diesem Fall X² und das Kohlenstoffatom in dem 5-gliedrigen Ring benachbart zu X² ebenfalls Teil der Cycloalkyl- oder Cycloalkenylringe sind),
(IV) R³ und R⁴ sind zur Bildung eines Benzolrings verbunden, der an den 5-gliedrigen Ring anelliert ist, der X¹, X² und das Stickstoffatom enthält (wobei in diesem Fall X² und das Kohlenstoffatom in dem 5-gliedrigen Ring benachbart zu X² ebenfalls Teil des Benzolrings sind), und
(V) R² und R³ sind zur Bildung von 5-gliedrigen oder 6-gliedrigen *N*-heterocyclischen Ringen ohne Substituenten verbunden, die an den 5-gliedrigen Ring anelliert sind, der X¹, X² und das Stickstoffatom enthält (wobei in diesem Fall X¹ und das Kohlenstoffatom in dem 5-gliedrigen Ring, das mit R³ verbunden ist, ebenfalls Teil der 5-gliedrigen oder 6-gliedrigen *N-*heterocyclischen Ringe sind).

2. Verfahren nach Anspruch 1, bei dem die Struktur des Kohlendioxidaddukts von Carben derart ist, wie es in der Formel (II) dargestellt ist: 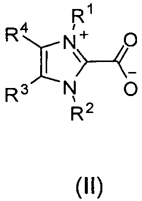 worin R¹, R², R³ und R⁴ mindestens eine der folgenden Bedingungen erfüllen:
(I) R¹ und R² sind unabhängig ausgewählt aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(II) R³ und R⁴ sind unabhängig ausgewählt aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(III) R³ und R⁴ sind zur Bildung von Cycloalkyl- oder Cycloalkenylringen mit 3 bis 8 Kohlenstoffatomen verbunden, die an den 5-gliedrigen Ring anelliert sind, der X¹, X² und das Stickstoffatom enthält (wobei in diesem Fall X² und das Kohlenstoffatom in dem 5-gliedrigen Ring benachbart zu X² ebenfalls Teil der Cycloalkyl- oder Cycloalkenylringe sind), und
(IV) R³ und, R⁴ sind zur Bildung eines Benzolrings verbunden, der an den 5-gliedrigen Ring anelliert ist, der X¹, X² und das Stickstoffatom enthält (wobei in diesem Fall X² und das Kohlenstoffatom in dem 5-gliedrigen Ring benachbart zu X² ebenfalls Teil des Benzolrings sind).

3. Verfahren nach Anspruch 1, bei dem die Struktur des Kohlendioxidaddukts von Carben derart ist, wie es in der Formel (III) dargestellt ist: 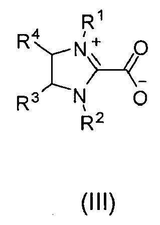 worin R¹ und R² unabhängig ausgewählt sind aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
worin R³ und R⁴ mindestens eine der folgenden Bedingungen erfüllen:
(I) R³ und R⁴ sind unabhängig ausgewählt aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind, und
(II) R³ und R⁴ sind zur Bildung von Cycloalkyl- oder Cycloalkenylringen mit 3 bis 8 Kohlenstoffatomen verbunden, die an den 5-gliedrigen Ring anelliert sind, der X¹, X² und das Stickstoffatom enthält (wobei in diesem Fall X² und das Kohlenstoffatom in dem 5-gliedrigen Ring benachbart zu X² ebenfalls Teil der Cycloalkyl- oder Cycloalkenylringe sind).

4. Verfahren nach Anspruch 1, bei dem die Struktur des Kohlendioxidaddukts von Carben derart ist, wie es in der Formel (IV) dargestellt ist: 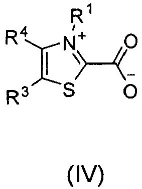 worin R¹ ausgewählt ist aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
worin R³ und R⁴ mindestens eine der folgenden Bedingungen erfüllen:
(I) R³ und R⁴ sind unabhängig ausgewählt aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(II) R³ und R⁴ sind zur Bildung von Cycloalkyl- oder Cycloalkenylringen mit 3 bis 8 Kohlenstoffatomen verbunden, die an den 5-gliedrigen Ring anelliert sind, der X¹, X² und das Stickstoffatom enthält (wobei in diesem Fall X² und das Kohlenstoffatom in dem 5-gliedrigen Ring benachbart zu X² ebenfalls Teil der Cycloalkyl- oder Cycloalkenylringe sind), und
(III) R³ und R⁴ sind zur Bildung eines Benzolrings verbunden, der an den 5-gliedrigen Ring anelliert ist, der X¹, X² und das Stickstoffatom enthält (wobei in diesem Fall X² und das Kohlenstoffatom in dem 5-gliedrigen Ring benachbart zu X² ebenfalls Teil des Benzolrings sind).

5. Verfahren nach Anspruch 1, bei dem die Struktur des Kohlendioxidaddukts von Carben derart ist, wie es in der Formel (V) dargestellt ist: 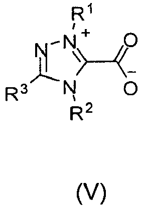 worin R¹, R² und R³ mindestens eine der folgenden Bedingungen erfüllen:
(I) R¹ und R² sind unabhängig ausgewählt aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind,
(II) R³ ist ausgewählt aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer Phenylgruppe, die einen oder mehrere Substituenten aufweist, der oder die aus einem Halogenatom, einer Hydroxylgruppe, einer Alkylgruppe und einer Cyanogruppe ausgewählt ist oder sind, und
(III) R² und R³ sind zur Bildung von 5-gliedrigen oder 6-gliedrigen *N*-heterocyclischen Ringen ohne Substituenten verbunden, die an den 5-gliedrigen Ring anelliert sind, der X¹, X² und das Stickstoffatom enthält (wobei in diesem Fall X¹ und das Kohlenstoffatom in dem 5-gliedrigen Ring, das mit R³ verbunden ist, ebenfalls Teil der 5-gliedrigen oder 6-gliedrigen *N-*heterocyclischen Ringe sind).

6. Verfahren nach einem der Ansprüche 1 bis 5, bei dem das Kohlendioxidaddukt von Carben und das Lactid in einem molaren Verhältnis von 1:5 bis 2000 gemischt werden.

7. Verfahren nach einem der Ansprüche 1 bis 5, bei dem das Lactid aus L-Lactid, D-Lactid, Meso-Lactid, racemischem Lactid und Gemischen davon ausgewählt ist.

8. Verfahren nach einem der Ansprüche 1 bis 5, bei dem das Gemisch ferner einen Initiator umfasst und der Initiator eine Verbindung umfasst, die eine Hydroxylgruppe aufweist.

9. Verfahren nach Anspruch 8, bei dem die Verbindung, die eine Hydroxylgruppe aufweist, Benzylalkohol oder Phenethylalkohol ist.

10. Verfahren nach Anspruch 8 oder 9, bei dem das molare Verhältnis des Initiators und des Lactids im Bereich von 1/10000 bis 1/2 liegt.

11. Verfahren nach einem der Ansprüche 1 bis 5, bei dem der Doppelschneckenextruder ein kämmender Gleichdrall-Doppelschneckenextruder ist und ein Zylinder des Extruders eine Mehrzahl von Abschnitten umfasst, die separat erwärmt werden, und die Temperatur jedes Abschnitts des Zylinders unter Verwendung von umgewälztem Kühlwasser unabhängig einstellbar ist.

12. Verfahren nach Anspruch 11, bei dem in dem Verfahren des reaktiven Extrudierens die Temperaturen der Mehrzahl von erwärmten Abschnitten des Doppelschneckenextruders gleich oder verschieden sind und im Bereich von 50 °C bis 300 °C liegen.

13. Verfahren nach Anspruch 11 oder 12, bei dem eine Schnecke des Doppelschneckenextruders ein L/D-Verhältnis im Bereich von 30 bis 70 aufweist.

14. Verfahren nach einem der Ansprüche 1 bis 5, bei dem ein Kopf des Doppelschneckenextruders mit einer Formvorrichtung verbunden ist, in der die Polymilchsäure und deren Produkte direkt zu einer gewünschten Form geformt werden.

## Revendications

1. Procédé de préparation d'acide polylactique, comprenant :
la fourniture d'un mélange comprenant un adduit de dioxyde de carbone de carbène de formule (I) et un lactide et
l'obtention d'acide polylactique par extrusion réactive du mélange en utilisant une extrudeuse à vis jumelées : 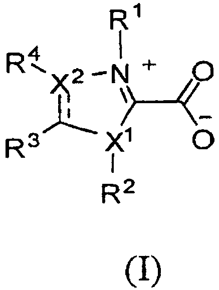 où la ligne en pointillés conjointement avec le trait plein parallèle à la ligne en pointillés représente une liaison unique ou une double liaison ;
X¹ est choisi parmi S et N ;
X² est choisi parmi C et N ; et
R¹, R², R³ et R⁴ satisfont au moins à l'une des conditions suivantes :
(I) R¹ et R² sont indépendamment choisis parmi :
de l'hydrogène,
des groupements alkyle ayant 1 à 10 atomes de carbone,
des groupements alkyle ayant 1 à 10 atomes de carbone et ayant également un ou plusieurs substituants choisis parmi un atome d'halogène, un groupement hydroxyle, un groupement phényle et un groupement cyano,
des groupements cycloalkyle ayant 3 à 6 atomes de carbone,
un atome d'halogène,
un groupement adamantyle,
un groupement phényle et
un groupement phényle ayant un ou plusieurs substituants choisis parmi un atome d'halogène, un groupement hydroxyle, un groupement alkyle et un groupement cyano ;
(II) R³ et R⁴ sont indépendamment choisis parmi :
de l'hydrogène,
un atome d'halogène,
un groupement cyano,
un groupement hydroxyle,
des groupements alkyle ayant 1 à 4 atomes de carbone, des groupements alkyle ayant 1 à 4 atomes de carbone et ayant également un ou plusieurs substituants choisis parmi un atome d'halogène, un groupement hydroxyle, un groupement phényle et un groupement cyano,
un groupement phényle et
un groupement phényle ayant un ou plusieurs substituants choisis parmi un atome d'halogène, un groupement hydroxyle, un groupement alkyle et un groupement cyano ;
(III) R³ et R⁴ sont liés pour former des groupements cycloalkyle ou cycloalcényle ayant 3 à 8 atomes de carbone fusionnés au noyau à 5 chaînons qui contient X¹, X² et l'atome d'azote (auquel cas X² et l'atome de carbone du noyau à 5 chaînons à côté de X² font également partie desdits noyaux de cycloalkyle ou cycloalcényle) ;
(IV) R³ et R⁴ sont liés pour former un noyau de benzène fusionné au noyau à 5 chaînons qui contient X¹, X² et l'atome d'azote (auquel cas X² et l'atome de carbone du noyau à 5 chaînons à côté de X² font également partie dudit noyau de benzène) ; et
(V) R² et R³ sont liés pour former des noyaux N-hétérocycliques à 5 ou 6 chaînons n'ayant pas de substituant, qui sont fusionnés au noyau à 5 chaînons qui contient X¹, X² et l'atome d'azote (auquel cas X¹ et l'atome de carbone du noyau à 5 chaînons lié à R³ font également partie desdits noyaux N-hétérocycliques à 5 ou 6 chaînons).

2. Procédé selon la revendication 1, dans lequel la structure de l'adduit de dioxyde de carbone de carbène est représentée par la formule (II) : 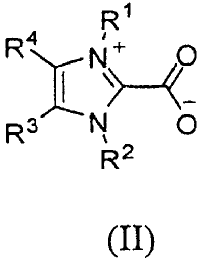 dans laquelle R¹, R², R³ et R⁴ satisfont à au moins l'une des conditions suivantes :
(I) R¹ et R² sont indépendamment choisis parmi :
de l'hydrogène,
des groupements alkyle ayant 1 à 10 atomes de carbone, des groupements alkyle ayant 1 à 10 atomes de carbone et ayant également un ou plusieurs substituants choisis parmi un atome d'halogène, un groupement hydroxyle, un groupement phényle et un groupement cyano,
des groupements cycloalkyle ayant 3 à 6 atomes de carbone,
un atome d'halogène,
un groupement adamantyle,
un groupement phényle et
un groupement phényle ayant un ou plusieurs substituants choisis parmi un atome d'halogène, un groupement hydroxyle, un groupement alkyle et un groupement cyano ;
(II) R³ et R⁴ sont indépendamment choisis parmi :
de l'hydrogène,
un atome d'halogène,
un groupement cyano,
un groupement hydroxyle,
des groupements alkyle ayant 1 à 4 atomes de carbone, des groupements alkyle ayant 1 à 4 atomes de carbone et ayant également un ou plusieurs substituants choisis parmi un atome d'halogène, un groupement hydroxyle, un groupement phényle et un groupement cyano,
un groupement phényle et
un groupement phényle ayant un ou plusieurs substituants choisis parmi un atome d'halogène, un groupement hydroxyle, un groupement alkyle et un groupement cyano ;
(III) R³ et R⁴ sont liés pour former des noyaux de cycloalkyle ou cycloalcényle ayant 3 à 8 atomes de carbone fusionnés au noyau à 5 chaînons qui contient X¹, X² et l'atome d'azote (auquel cas X² et l'atome de carbone du noyau à 5 chaînons à côté de X² font également partie desdits noyaux de cycloalkyle ou cycloalcényle) ; et
(IV) R³ et R⁴ sont liés pour former un noyau de benzène fusionné au noyau à 5 chaînons qui contient X¹, X² et l'atome d'azote (auquel cas X² et l'atome de carbone du noyau à 5 chaînons à côté de X² font également partie dudit noyau de benzène).

3. Procédé selon la revendication 1, dans lequel la structure de l'adduit de dioxyde de carbone de carbène est représentée par la formule (III) : 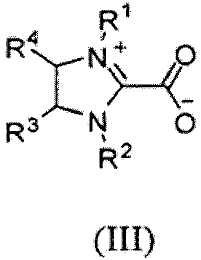 dans laquelle R¹ et R² sont indépendamment choisis parmi :
de l'hydrogène,
des groupements alkyle ayant 1 à 10 atomes de carbone,
des groupements alkyle ayant 1 à 10 atomes de carbone et ayant également un ou plusieurs substituants choisis parmi un atome d'halogène, un groupement hydroxyle, un groupement phényle et un groupement cyano,
des groupements cycloalkyle ayant 3 à 6 atomes de carbone,
un atome d'halogène,
un groupement adamantyle,
un groupement phényle et
un groupement phényle ayant un ou plusieurs substituants choisis parmi un atome d'halogène, un groupement hydroxyle, un groupement alkyle et un groupement cyano ;
dans lequel R³ et R⁴ satisfont à au moins l'une des conditions suivantes :
(I) R³ et R⁴ sont indépendamment choisis parmi :
de l'hydrogène,
un atome d'halogène,
un groupement cyano,
un groupement hydroxyle,
des groupements alkyle ayant 1 à 4 atomes de carbone,
des groupements alkyle ayant 1 à 4 atomes de carbone et ayant également un ou plusieurs substituants choisis parmi un atome d'halogène, un groupement hydroxyle, un groupement phényle et un groupement cyano,
un groupement phényle et
un groupement phényle ayant un ou plusieurs substituants choisis parmi un atome d'halogène, un groupement hydroxyle, un groupement alkyle et un groupement cyano ; et
(II) R³ et R⁴ sont liés pour former des noyaux de cycloalkyle ou cycloalcényle ayant 3 à 8 atomes de carbone fusionnés au noyau à 5 chaînons qui contient X¹, X² et l'atome d'azote (auquel cas X² et l'atome de carbone du noyau à 5 chaînons à côté de X² font également partie desdits noyaux de cycloalkyle ou cycloalcényle).

4. Procédé selon la revendication 1, dans lequel la structure de l'adduit de dioxyde de carbone de carbène est représentée par la formule (IV) : 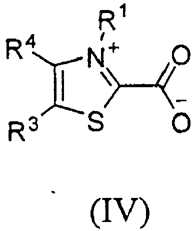 R¹ est choisi parmi :
de l'hydrogène,
des groupements alkyle ayant 1 à 10 atomes de carbone,
des groupements alkyle ayant 1 à 10 atomes de carbone et ayant également un ou plusieurs substituants choisis parmi un atome d'halogène, un groupement hydroxyle, un groupement phényle et un groupement cyano,
des groupements cycloalkyle ayant 3 à 6 atomes de carbone,
un atome d'halogène,
un groupement adamantyle,
un groupement phényle et
un groupement phényle ayant un ou plusieurs substituants choisis parmi un atome d'halogène, un groupement hydroxyle, un groupement alkyle et un groupement cyano ;
dans lequel R³ et R⁴ satisfont à au moins l'une des conditions suivantes :
(I) R³ et R⁴ sont indépendamment choisis parmi :
de l'hydrogène,
un atome d'halogène,
un groupement cyano,
un groupement hydroxyle,
des groupements alkyle ayant 1 à 4 atomes de carbone,
des groupements alkyle ayant 1 à 4 atomes de carbone et ayant également un ou plusieurs substituants choisis parmi un atome d'halogène, un groupement hydroxyle, un groupement phényle et un groupement cyano,
un groupement phényle et
un groupement phényle ayant un ou plusieurs substituants choisis parmi un atome d'halogène, un groupement hydroxyle, un groupement alkyle et un groupement cyano ;
(II) R³ et R⁴ sont liés pour former des noyaux de cycloalkyle ou cycloalcényle ayant 3 à 8 atomes de carbone fusionnés au noyau à 5 chaînons qui contient X¹, X² et l'atome d'azote (auquel cas X² et l'atome de carbone du noyau à 5 chaînons à côté de X² font également partie desdits noyaux de cycloalkyle ou cycloalcényle) ; et
(III) R³ et R⁴ sont liés pour former un noyau de benzène fusionné au noyau à 5 chaînons qui contient X¹, X² et l'atome d'azote (auquel cas X² et l'atome de carbone du noyau à 5 chaînons à côté de X² font également partie dudit noyau de benzène).

5. Procédé selon la revendication 1, dans lequel la structure de l'adduit de dioxyde de carbone de carbène est représentée par la formule (V) : 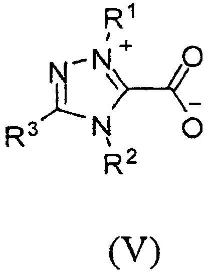 dans laquelle R¹, R², R³ et R⁴ satisfont à au moins l'une des conditions suivantes :
(I) R¹ et R² sont indépendamment choisis parmi :
de l'hydrogène,
des groupements alkyle ayant 1 à 10 atomes de carbone, des groupements alkyle ayant 1 à 10 atomes de carbone et ayant également un ou plusieurs substituants choisis parmi un atome d'halogène, un groupement hydroxyle, un groupement phényle et un groupement cyano,
des groupements cycloalkyle ayant 3 à 6 atomes de carbone,
un atome d'halogène,
un groupement adamantyle,
un groupement phényle et
un groupement phényle ayant un ou plusieurs substituants choisis parmi un atome d'halogène, un groupement hydroxyle, un groupement alkyle et un groupement cyano ;
(II) R³ est choisi parmi :
de l'hydrogène,
un atome d'halogène,
un groupement cyano,
un groupement hydroxyle,
des groupements alkyle ayant 1 à 4 atomes de carbone, des groupements alkyle ayant 1 à 4 atomes de carbone et ayant également un ou plusieurs substituants choisis parmi un atome d'halogène, un groupement hydroxyle, un groupement phényle et un groupement cyano,
un groupement phényle et
un groupement phényle ayant un ou plusieurs substituants choisis parmi un atome d'halogène, un groupement hydroxyle, un groupement alkyle et un groupement cyano ; et
(III) R² et R³ sont liés pour former des noyaux N-hétérocycliques à 5 ou 6 chaînons n'ayant pas de substituant, qui sont fusionnés au noyau à 5 chaînons qui contient X¹, X² et l'atome d'azote (auquel cas X¹ et l'atome de carbone du noyau à 5 chaînons lié à R³ font également partie desdits noyaux N-hétérocycliques à 5 ou 6 chaînons).

6. Procédé selon l'une quelconque des revendications 1 à 5, dans lequel l'adduit de dioxyde de carbone de carbène et le lactide sont mélangés dans un rapport molaire de 1:5 à 2 000.

7. Procédé selon l'une quelconque des revendications 1 à 5, dans lequel le lactide est choisi parmi le L-lactide, le D-lactide, le méso-lactide, le lactide racémique et leurs mélanges.

8. Procédé selon l'une quelconque des revendications 1 à 5, dans lequel le mélange comprend en outre un initiateur et l'initiateur comprend un composé ayant un groupement hydroxyle.

9. Procédé selon la revendication 8, dans lequel le composé ayant un groupement hydroxyle est l'alcool benzylique ou l'alcool phénéthylique.

10. Procédé selon la revendication 8 ou 9, dans lequel un rapport molaire de l'initiateur et du lactide se situe dans une plage de 1/10000 à ½.

11. Procédé selon l'une quelconque des revendications 1 à 5, dans lequel l'extrudeuse à vis jumelées est une extrudeuse à vis jumelées co-rotatives en prise et un cylindre de l'extrudeuse comprend de multiples sections séparément chauffées et la température de chaque section du cylindre peut être commandée indépendamment en utilisant de l'eau de refroidissement en circulation.

12. Procédé selon la revendication 11, dans lequel, dans le processus d'extrusion réactive, les températures de multiples sections chauffées de l'extrudeuse à vis jumelées sont identiques ou différentes, allant dans une plage de 50 °C à 300 °C.

13. Procédé selon la revendication 11 ou 12, dans lequel une vis de l'extrudeuse à vis jumelées a un rapport d'aspect de 30 à 70.

14. Procédé selon l'une quelconque des revendications 1 à 5, dans lequel une tête de l'extrudeuse à vis jumelées est raccordée à un équipement de moulage, dans lequel l'acide polylactique et ses produits sont directement moulés à la forme souhaitée.
